# EUROPEAN PATENT APPLICATION

(11) **EP 0 548 430 A1**
(43) Date of publication of application: **30.06.1993**
(21) Application number: 91312073.9
(22) Date of filing: 27.12.1991
(51) Int. Cl.: H04N 7/133

(54) **Signal encoding and decoding apparatus**

(71) Applicant: MATSUSHITA ELECTRIC INDUSTRIAL CO., LTD., Kadoma-shi, Osaka-fu, 571 (JP)
(72) Inventor: Shinya, Kadono, Katano-shi, Osaka-fu 576 (JP); Tatsuro, Juri, Osaka-shi, Osaka-fu 534 (JP)
(74) Representative: Crawford, Andrew Birkby

(57) **Abstract**

The encoding apparatus comprises on orthogonal transformer for orthogonally transforming a video input signal, a parameter controller (12) for controlling the value of quantization steps by dividing the orthogonally transformed signal at least into two regions and preparing plural quantization steps in each region, a quantizer for quantizing at the quantization step selected by the parameter control means, and an encoder (9) for encoding the value quantized by the quantizer. In each region, quantizing at the same quantization steps, by combining the quantized values in each region, it is possible to increase the number of combinations of the quantization matrices which are quantization steps in each orthogonal transformation output signal, by simple quantizers.

## Description

### BACKGROUND OF THE INVENTION

### 1. Field of the Invention

The present invention relates to an encoding apparatus as the means for reducing the quantity of data necessary for transmitting or storing image signals in order to save the communication expenses and extend the recording time.

### 2. Description of the Prior Art

A block diagram of a conventional encoding apparatus is shown in Fig. 8. In the diagram, 1 is an input signal, 2 is an orthogonal transformer for putting out an orthogonal transformation signal 3, 4 is a quantizer for quantizing the orthogonal transformation signal 3 and putting out a quantization value 5, 6 is a quantization step selection signal, 7 is a selector for selecting one from the quantization value 5, and putting out as a quantization value 8, and 9 is an encoder for encoding the quantization value 8 and putting out an encoding signal 10.

In thus composed conventional encoding apparatus, the operation is explained below. The input signal 1 is orthogonally transformed by the orthogonal transformer 2. Generally, an orthogonally transformed signal is partial in energy distribution as compared with the input signal 1, and when a deviation occurs, the data quantity can be reduced easily as proved by information theory, and hence the orthogonal transformation is often used as the technique for reducing the data quantity. In particular, the DCT (discrete cosine transformation) whose component is corresponded to frequency is known to be one of the orthogonal transformation highest in the data quantity reducing efficiency. The orthogonally transformed data is quantized by the quantizer 4, and the important orthogonally transformed component is weighted. That is, the unimportant component in vision is quantized so as to reduce the date quantity more. Among the quantization values 5 calculated in several quantizers 4, the one indicated by the quantization step selection signal 6 is selected by the selector 7. The selection signal is controlled by the buffer occupancy or the like, and when the average data quantity is much, the bigger quantization value 5 is selected, or when the average data quantity is less, to the contrary, the smaller quantization value 5 is selected. One of thus selected quantization values 5 of the plural quantizers 4 is encoded together with the quantization step selection signal 6 by the encoder 9. In the encoder 9, it is encoded with either fixed length coding or variable length coding.

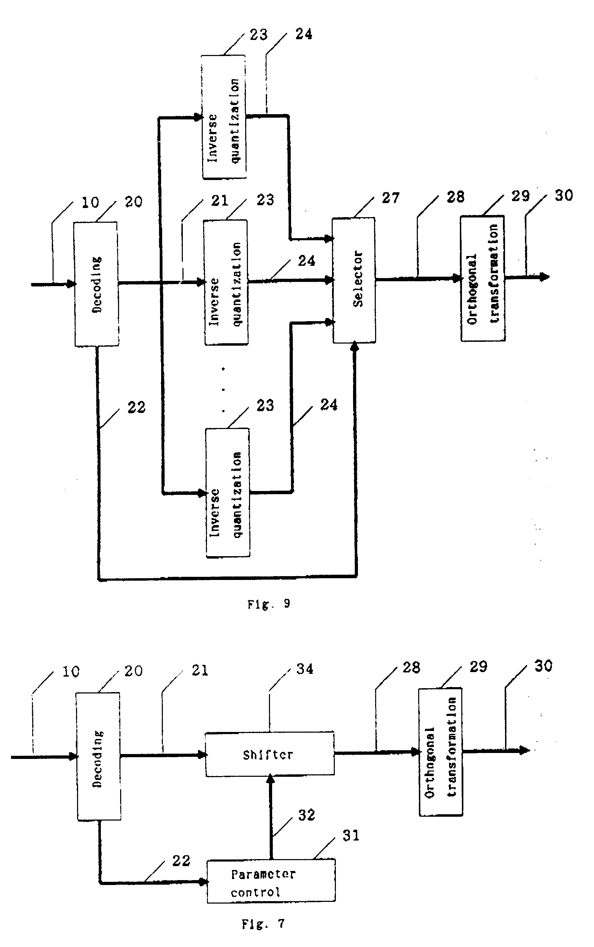

A block diagram of a conventional decoding apparatus is shown in Fig. 9. In the diagram, 10 is an encoded signal encoded by the encoding apparatus, 20 is a decoder for putting out a decoded signal 21 which is encoded by the encoder 9, 23 is a inverse quantizer for producing a inverse quantized value 24 with same step size as the quantizer 4, 22 is a decoded signal of the quantization step selection signal 6, 27 is a selector for producing a reverse quantization value 28, and 29 is an orthogonal transformer for producing a reproduction signal by inverse transforming the orthogonal transformer 2 in the encoding apparatus.

In thus composed conventional decoding apparatus, the operation is described below. The decoder 20 decodes the signal of the encoder 9, and the inverse quantizer 23 is the inverse quantizer of the same quantization step as the quantizer 4, and the orthogonal transformer 29 is the inverse orthogonal transformer of the orthogonal transformer 2. Therefore, the encoded signal is correctly decoded in the above constitution.

However, in such conventional encoding apparatus and decoding apparatus, the quantizers and inverse quantizers are required as many as the number of the quantization step selection signals 6 available. Therefore, for fine data quantity control, many quantizers and inverse quantizers are needed, and the hardware size becomes very large. To the contrary, when the number of quantizers and inverse quantizers is reduced, fine data control is not possible, which may lead to degradation of picture quality.

### SUMMARY OF THE INVENTION

It is hence a primary object of the invention to present an encoding apparatus capable of performing fine data quantity control without increasing the hardware scale and also a decoding apparatus capable of decoding the signal encoded by the encoding apparatus, thereby improving the encoded picture quality.

To achieve the above object, the invention presents an encoding apparatus which comprises first orthogonal transforming means for orthogonally transforming an input signal, parameter control means for controlling values of quantization steps by disposing plural quantization steps in every region by dividing the signal orthogonally transformed by the first orthogonal transforming means into at least two regions, quantization means for quantizing at a quantization step selected by the parameter control means, and encoding means for processing the quantization value of the quantizing means either by fixed length coding or by variable length coding, and also a decoding apparatus which comprises decoding means for receiving the encoded signal encoded by the encoding apparatus and decoding the variable length code or fixed length code of the encoded signal to obtain a decoded signal, inverse quantizing means for dividing the decoded signal into the same regions as the regions divided by the encoding means, and quantizing reversely at the quantization step of the quantization effected by the encoding means in each region, and second orthogonal transforming means for orthogonally transforming the inverse quantization value of the inverse quantizing means here, the second orthogonal transforming means is in the inverse transformation of the first orthogonal transforming means.

The invention, being thus composed, is capable of controlling the data quantity fine, more than in m manners of the prior art by the same number of quantizers of m, by dividing the region into n sections (n being an integer of 2 or more), possessing m quantizers to compose mⁿ combinations, and selecting the data set to be encoded by the encoding means from the combinations. Therefore, fluctuations of picture quality are smaller, and the picture quality is improved in average as compared with the conventional encoding apparatus and decoding apparatus.

According to the invention, as explained herein, without increasing the number of quantizers, fine data quantity control is realized, and a visually preferable picture quality is obtained with smaller local variations, of which practical effect is great.

### BRIEF DESCRIPTION OF THE DRAWINGS

Fig. 1 (a), (b) are block diagrams of an encoding apparatus in an embodiment of the invention,
Fig. 2 is a diagram of region divisions of a block,
Fig. 3, Fig. 4 are variation diagrams of quantization steps by block divisions,
Fig. 5 is a block diagram of an encoding apparatus in other embodiment of the invention,
Fig. 6 (a), (b) are block diagrams of a decoding apparatus in an embodiment of the invention,
Fig. 7 is a block diagram of a decoding apparatus in other embodiment of the invention,
Fig. 8 is a block diagram of a conventional encoding apparatus,
Fig. 9 is a block diagram of a conventional decoding apparatus,
Fig. 10 is a block diagram of an encoding apparatus in a different embodiment of the invention, and
Fig. 11 is a block diagram of a decoding apparatus in a further different embodiment of the invention.

### DESCRIPTION OF THE PREFERRED EMBODIMENTS

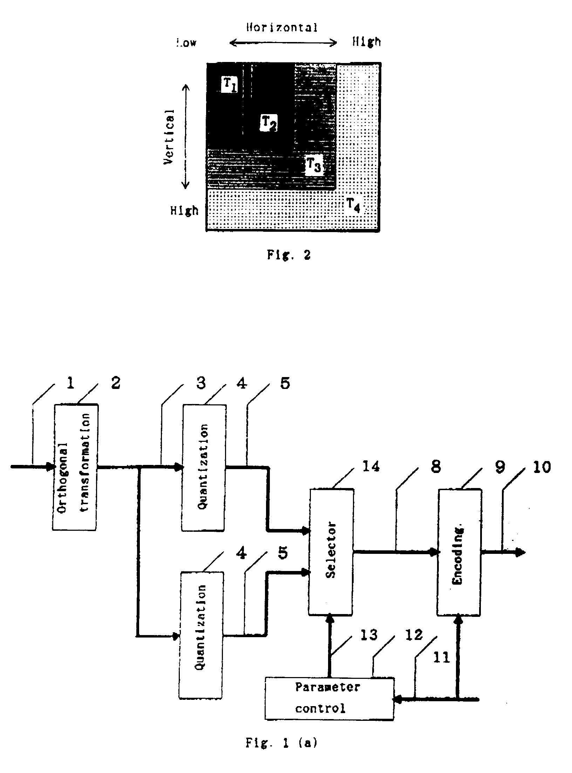

Fig. 1 (a) is a block diagram of an encoding apparatus in a first embodiment of the invention. In the diagram, 1 is an input signal, 2 is an orthogonal transformer for producing an orthogonal transformation signal 3, 4 is a quantizer for producing a quantization value 5 by quantizing the orthogonal transformation signal 3, 11 is a compression parameter control signal, 12 is a parameter controller for producing a control signal 13 for selecting over the quantization value 5, 14 is a selector for selecting one of the quantization values 5 for each component of orthogonal transformation and producing as quantization value 8, and 8 is an encoder for encoding the quantization value 8 and producing as an encoded signal 10.

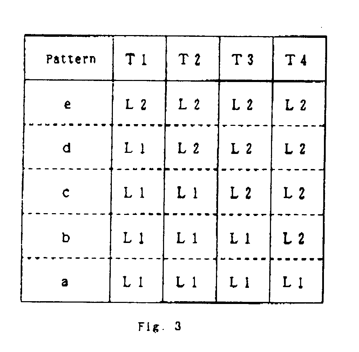

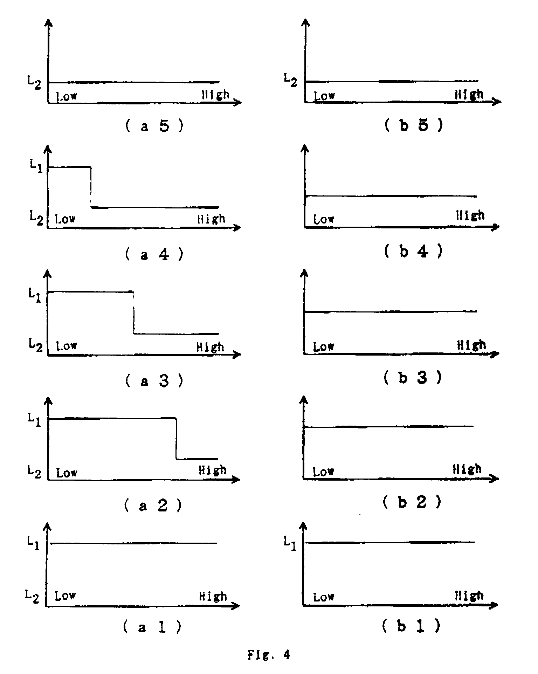

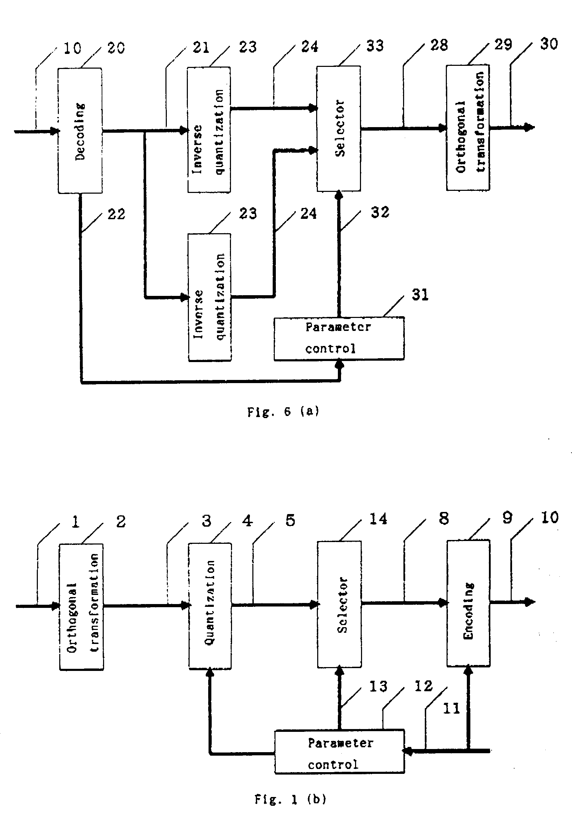

In thus composed encoding apparatus of the invention, the operation is as follows. The input signal 1 is orthogonally transformed in the orthogonal transformer 2. The orthogonally transformed data is quantized by each quantizer. Among the quantization values 5 calculated thus by several quantizers 4, the one indicated by the control signal 13 is selected by the selector 14 for each component of orthogonal transformation. The control signal 13 is generated in each region of the orthogonal transformation block from the compression parameter control signal 11. Fig. 2 shows an example of region divisions of the orthogonal transformation block. The components are arranged so that the upper left corner may correspond to low frequency, and the lower right corner, to high frequency. Supposing the quantization steps of each region to be T1, T2, T3, T4, each region is assumed to have two values L1, L2 (L1>L2), and the combination satisfying the condition of T1≧T2≧T3≧T4 is available in five types as shown in Fig. 3, and this quantization step is shown in Fig. 4 (a1) to Fig. 4 (a5). The control signal 13 commands to select the quantization value 5 corresponding to the quantization step T1 (1≦i≦4) at the position of the orthogonally transformed component by the selector 14. These five patterns may be quantized in two manners of L1 and L2 for each component, but in the conventional method (Fig. 4 (b1) to Fig. 4 (b5)), five manners of quantization are required for each component. In this technique, therefore, without increasing the number of quantizers, the number of candidates for selection by the selector 14 may be greatly increased. Changeover of the quantization steps is used for increasing or decreasing the data quantity, and for regulating the increase or decrease, more delicate control is possible when the number of candidates selected by the selector 14 is greater. As a result, a visually preferable picture quality is obtained without local fluctuations of the picture quality. Incidentally, the control signal 13 is encoded by the encoder 9 together with the selected quantization value 8. In the encoder 9, either fixed length coding or variable length coding is effected.

In this way, according to the embodiment, using the parameter controller 12 and selector 14, the orthogonally transformed data is divided into several regions, and by the combination of quantization steps in each divided region, fine data quantity control is effected, and degradation of picture quality may be reduced.

In Fig. 1 (a), when the quantizers 4 are realized by multipliers, only one quantizer is enough by changing over the multiplying factor. A block diagram is shown in Fig. 1 (b). In Fig. 1 (b), those acting same as the devices in Fig. 1 (a) are identified with same reference numbers, the quantizer 4 is composed of a multiplier, but it is not intended to multiply by an arbitrary multiplying factor. That is, as shown in Fig. 6 (a), when one is selected from two quantization steps, there are two multiplying factors. Generally, using m quantization steps (m being an integer of 2 or more), it is enough to prepare m multiplying factors, and when m is a small figure, by preliminarily storing the results of multiplications in ROM or the like, the hardware scale may be reduced by far as compared with the case of composing by using multipliers which actually perform multiplications. Or, without using ROM, when the multiplier is composed of logic circuit elements, as the number of multiplying factors is limited, the hardware scale may be reduced as compared with ordinary multipliers capable of multiplying by arbitrary multiplying factors.

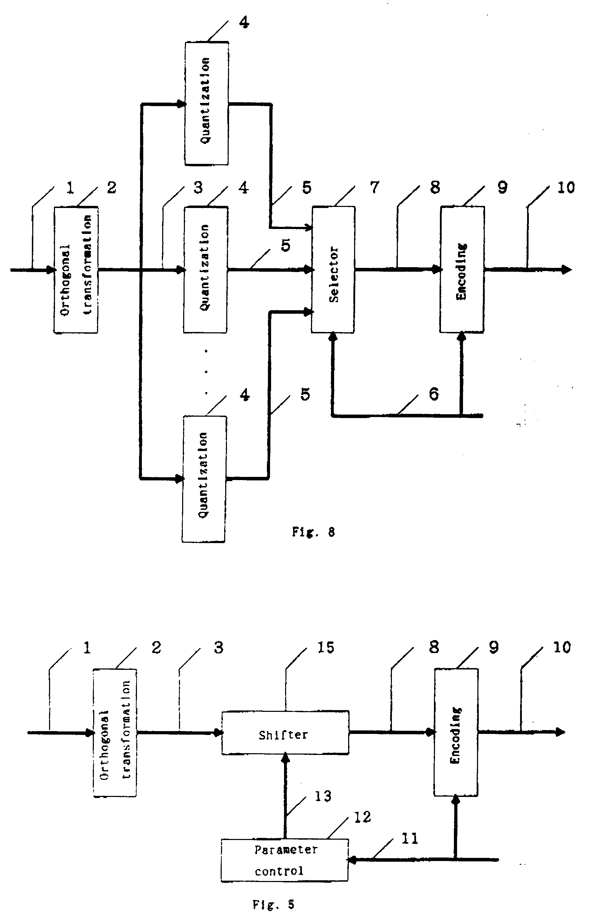

Fig. 5 is a block diagram of an encoding apparatus in other embodiment of the invention. In this diagram, 1 is an input signal, 2 is an orthogonal transformer for delivering an orthogonal transformation signal 3, 11 is a compression parameter signal, 12 is a parameter controller for delivering the number of bits 13 for shifting the orthogonal transformation output, 15 is a shifting device for producing the quantization value 8 shifting the orthogonal transformation signal 3 by the number of bits 13, and 9 is an encoder for encoding the quantization value 8 and delivering as an encoded signal 10.

In thus composed encoding apparatus of the invention, the operation is described below. In the embodiment in Fig. 5, all quantization steps in the embodiment in Fig. 1 are defined as the exponents of 2. When all quantization steps are exponents of 2, quantization may be effected by the shifting device only, and the hardware is simplified. The input signal 1 is orthogonally transformed in the orthogonal transformer 2. From the parameter control signal 11, the number of bits 13 for shifting in each region is generated, and the shifting device 15 shifts the orthogonal transformation signal 3 by this number of bits 13. The shifted quantization value 8 is encoded in the encoder 9 together with the parameter control signal.

According to this embodiment, thus, using the parameter controller 12 and the shifting device 15, the orthogonally transformed data is divided into several regions, and by the combination of the number of shifts in each divided region, fine data quantity control is effected, thereby reducing fluctuations of picture quality.

Fig. 6 (a) is a block diagram of a decoding apparatus in the first embodiment of the invention. In the diagram, 10 is an encoded signal being encoded by the encoding apparatus, 20 is a decoder for decoding the encoded by the encoder 9 in Fig. 1 and producing a decoded signal 21, 23 is a inverse quantizer for inversely quantizing at the same quantization step of the quantizer 4 in Fig. 1 and producing a inverse quantization value 24, 22 is a decoded signal of the compression parameter control signal in Fig. 1, 31 is a parameter controller for producing a control signal 32 for selecting in each region the inverse quantization value 24 reversely quantized at the quantization step selected by the encoding apparatus in Fig. 1, 33 is a selector for changing over the reverse quantization value 24 in each region by the control signal 27 and producing as inverse quantization value 28, and 29 is orthogonal transformer for inversely transforming the orthogonal transformer 2 in the encoding apparatus in Fig. 1 and producing a reproduction signal 30.

In thus composed decoding apparatus of the invention, the operation is described below. This embodiment is a decoding apparatus corresponding to the encoding apparatus shown in Fig. 1. The encoded signal 10 is decoded into a decoded signal 21 and a compression parameter control signal 22 by the decoder 20. The decoded signal 21 is inversely quantized by the inverse quantizer 23. The parameter controller 31 generates a control signal 32 in each region of the orthogonal transformation signal from the compression parameter control signal 22, and this control signal 32 is same as the control signal 13 used in the region by the selector 14 of the encoding apparatus in Fig. 1. In the selector 33, the reverse quantizer 24 is selected in each region by the control signal 32, and the quantization value 28 is composed. Finally, the orthogonal transformer 29 orthogonally transforms the inverse quantization value 28 in the inverse transformation of the orthogonal transformer 2 in Fig. 1, thereby generating a reproduction signal 30.

Thus, according to the embodiment, using the parameter controller 31 and the selector 33, the orthogonally transformed data is divided into several regions, and by the combination of the quantization steps in each divided region, fine data quantity control is effected, and degradation of picture quality may be reduced. Meanwhile, in Fig. 6 (a), when the inverse quantizers 23 are realized by multipliers, only one quantizer is enough by changing over the multiplying factors. A block diagram is shown in Fig. 6 (b).

Fig. 7 is a block diagram of the decoding apparatus in the first embodiment of the invention. In this diagram, 10 is an encoded signal encoded by the encoding apparatus, 20 is a decoder for producing a decoded signal 21 by decoding the encoded signal by the encoder 9, 22 is a decoded signal of the compression parameter control signal in Fig. 5, 31 is a parameter controller for generating the number of shifts 32 for shifting the decoded signal 21, 28 is a inverse quantization value shifted by a shifting device 34, and 29 is an orthogonal transformer for inversely transforming the inverse quantization value 28 of the orthogonal transformer 2 in the encoding apparatus in Fig. 1 and producing a reproduction signal 30.

In thus composed decoding apparatus of the embodiment, the operation is described below. This embodiment relates to the encoder corresponding to the encoding apparatus in Fig. 5. The encoded signal 10 is decoded in the decoder 20 into a decoded signal 21 and a compression parameter control signal 22. The parameter controller 31 generates a control signal 32 in each region of the orthogonal transformation signal from the compression parameter control signal 22, and this control signal 32 is same as the number of shifts 13 used in the number of shifts in the region in the shifting device 15 of the encoding apparatus in Fig. 5. In the shifting device 34, the decoded signal 21 is shifted in each region by the number of shifts 13 and the inverse quantization value 28 is composed. Finally, the orthogonal transformer 29 orthogonally transforms the inverse quantization value 28 in inverse transformation of the orthogonal transformer 2 in Fig. 5, thereby generating a reproduction signal 30.

Thus, according to the embodiment, by using the parameter controller 31 and the shifting device 34, the orthogonally transformed data is divided into several regions, and by the combination of the number of shifts in each divided region, fine data quantity control is effected, thereby reducing the degradation of the data quantity.

When the compression rate is large, meanwhile, the quantization steps in the region corresponding to the low frequency component are increased as compared with the quantization steps in the region corresponding to the high frequency component, and the quantization distortion may be concentrated in the high frequency component, so that the picture quality is not so bad visually.

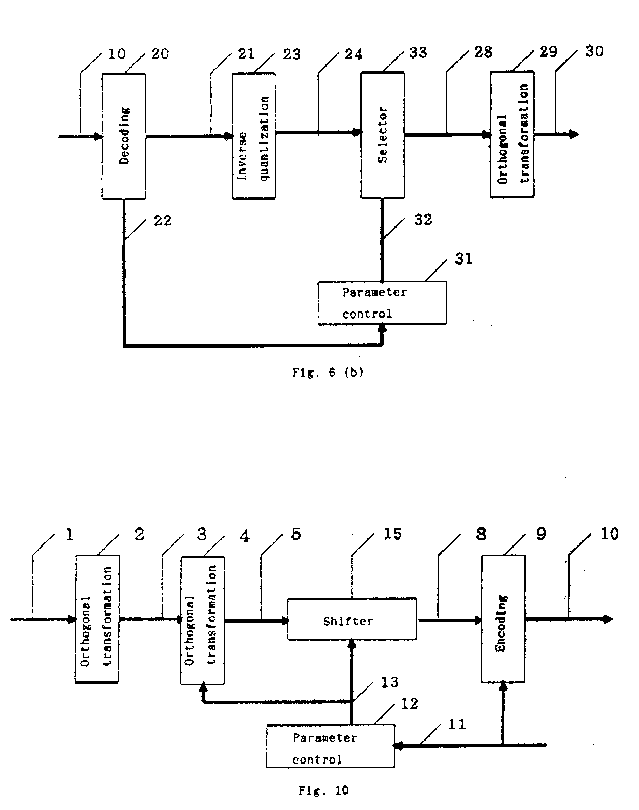

In the embodiment, incidentally, quantization is effected by using either the quantizer or shifting device, but it is also possible, by cascade connection of the quantizer and shifting device, to reduce the number of quantizers, or to perform data quantity control by finer quantization steps than the exponent of 2. A block diagram of the encoding apparatus is shown in Fig. 10. Each device is identified with the same reference number as in the foregoing embodiments, and explanation is omitted.

In this embodiment, the orthogonally transformed data 3 is quantized by the quantizer 4. In this quantizer 4, same as in the embodiment in Fig. 1 (b), plural quantization steps may be quantized by one quantizer. The signal quantized by the quantizer 4 is further bit-shifted by the shifting device 15, and is encoded by the encoder 9. Therefore, if the quantizer 4 can quantize in m different manners and the shifting device 15 can shift in n different manners, this encoding apparatus can quantize in a total of m × n different manners, and when a desired combination of quantization steps is selected from this great number of combinations of quantization steps by the compression parameter control signal 11, fine quantization step control is realized.

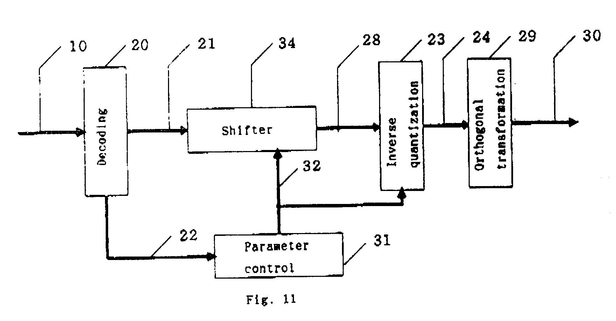

The inverse quantizer and shifting device may be also connected in cascade similarly. Likewise a block diagram is shown in Fig. 11. This diagram relates to the decoding apparatus for decoding the signal encoded by the encoding apparatus shown in Fig. 10. Each device is identified with the same reference number as in the preceding embodiments, and explanation is omitted.

By the way, when the square root of 2 is used as the quantization step, the inverse quantization is composed of the bit shifts of square root of 2 and 1 bit, and the hardware is complified. Furthermore, the multiplication by the multiplying factor of the square root of 2 may be shared by the encoding apparatus and decoding apparatus.

A block diagram is shown in Fig. 11. This diagram relates to a decoding apparatus for decoding the signal encoded by the encoding apparatus shown in Fig. 10. Each device is identified with the same reference number as in the foregoing embodiments, and explanation is omitted.

In this embodiment, the encoded data 10 is decoded by the decoder 20. The decoded signal is bit-shifted by the shifting device 34 same as in the embodiment in Fig. 7, and is inversely quantized by the inverse quantizer 23. In the shifting device 34, being shifted in the reverse direction by the same number of bits as the shifting device 15 in Fig. 10, the quantization step in Fig. 10 is multiplied by the shifted signal in the reverse quantizer 23. Therefore, if the inverse quantizer 23 can inversely quantize in m different manners and the shifting device 23 can shift in n different manners, this decoding apparatus can inversely quantize in a total of m × n different manners, and when the combination of the quantization steps used in the coding is selected from this great number of combinations of quantization steps by the compression parameter control signal 11, decoding is done correctly.

Also in the decoding apparatus in Fig. 11, meanwhile, it is not necessary that the number of shifts of the shifting device 34 should coincide with the number of shifts of the shifting device 15 in the embodiment in Fig. 10, and it is possible to decode correctly when the quantization step for inversely quantizing coincides with the quantization step of the encoding apparatus by the combination of the shifting device 34 and the reverse quantizer 23.

Of course, it is also possible to rearrange the sequence of the shifting device 15 and quantizer 4 in the encoding apparatus in Fig. 10, or if the shifting device 34 and the reverse quantizer 23 in the decoding apparatus in Fig. 11 are changed in the order of arrangement, the same processing effect will be obtained.

## Claims

1. An encoding apparatus comprising orthogonal transforming means for orthogonally transforming an input signal, parameter control means for controlling the value of quantizing steps by dividing the orthogonally transformed signal into at least two regions and preparing quantization steps in each region, quantizing means for quantizing at the quantization step selected by the parameter control means, and encoding means for encoding the quantization value of the quantizing means.

2. An encoding apparatus of claim 1, wherein the quantization step is controlled so that, when quantizing the divided regions, the quantization steps of the region corresponding to almost all high frequency components may not be smaller than the quantization steps of the region corresponding to log frequency components.

3. An encoding apparatus of claim 2, wherein only exponents of 2 are used as quantization steps, and only bit shifting devices are used as the quantizing means.

4. An encoding apparatus of claim 2, wherein the quantizing means is realized by using quantizers having only exponents of 2 and quantizers having quantization steps of other than exponents of 2.

5. An encoding apparatus of claim 3, wherein the square root of 2 is used as the quantization steps other than the exponents of 2.

6. A decoding apparatus comprising decoding means for receiving an encoded signal encoded by an encoding apparatus comprising a first orthogonal transforming means for orthogonally transforming an input signal, parameter control means for controlling the value of quantization steps by dividing the signal orthogonally transformed by the first orthogonal transforming means into at least two regions and preparing plural quantization steps in each region, quantizing means for quantizing at the quantization step selected by the parameter control means, and encoding means for encoding the quantization value of the quantizing means, and decoding the encoded signal to obtain a decoded signal, inverse quantizing means for reversely quantizing at the quantization step of the quantization effected by the encoding means in each region by dividing the encoded signal into the same regions as by the encoding means, and second orthogonal transforming means for orthogonally transforming the inverse quantization value of the inverse quantizing means here, the second orthogonal transforming means is in the inverse transformation of the first orthogonal transforming means.

7. A decoding apparatus of claim 6, wherein only exponents of 2 are used as quantization steps.

8. A decoding apparatus of claim 6, wherein the reverse quantizing means is realized by using reverse quantizers having only exponents of 2 and reverse quantizers having quantization steps of other than exponents of 2.

9. A decoding apparatus of claim 8, wherein the square root of 2 is used as quantization steps other than exponents of 2.
